# EUROPEAN PATENT SPECIFICATION

(11) **EP 3 220 247 B1**
(45) Date of publication and mention of the grant of the patent: **11.05.2022**
(21) Application number: 17157292.8
(22) Date of filing: 22.02.2017
(51) Int. Cl.: G06F 3/044

(54) **CONTACT DETERMINATION DEVICE AND DETERMINATION METHOD**
KONTAKT-BESTIMMUNGSVORRICHTUNG UND BESTIMMUNGSVERFAHREN
DISPOSITIF DE DÉTERMINATION DE CONTACT ET PROCÉDÉ DE DÉTERMINATION

(30) Priority: 29.02.2016 JP 2016037173
(43) Date of publication of application: 20.09.2017
(73) Proprietor: Alps Alpine Co., Ltd., Tokyo 145-8501 (JP)
(72) Inventor: Sagawai, Shinichi, Ot-ku, Tokyo 145-8501 (JP)
(74) Representative: Schmitt-Nilson Schraud Waibel Wohlfrom Patentanwälte Partnerschaft mbB

(56) References cited:
- EP-A1- 2 544 078
- EP-A1- 2 741 180
- EP-A1- 3 220 243
- EP-A2- 2 778 867
- JP-A- 2010 257 046
- JP-A- 2015 106 162
- US-A1- 2013 127 756
- US-A1- 2015 042 607
- US-A1- 2015 103 043

## Description

The present invention relates to a device and method for determining whether an operating object is in a touch state relative to an operation surface.

Techniques have been developed to achieve ease of operation of an electronic apparatus, such as a touch panel or a touch pad, even when a user who wears gloves operates an operation surface of the apparatus. For example, International Publication No. WO 2012/169106 discloses a technique for determining a measurement value (e.g., the area of part of an operation surface where capacitances have changed) responsive to the presence or absence of a glove and the thickness of the glove, for example, at the time when a user unlocks a touch panel, and setting a sensitivity level of the touch panel based on the measurement value.

In the above-described related-art technique, however, a proper sensitivity has to be previously measured for each estimated glove thickness so that a proper sensitivity level can be set based on a measurement value as described above. Disadvantageously, the related-art technique requires measurement of proper sensitivities of the touch panel in advance.

EP 2 778 876 A2 discloses a method for operating a touch screen, the method including recognizing an indirect touch based on detection information detected through the touch screen, and setting a touch sensitivity of the touch screen panel corresponding to the indirect touch.

EP 2 741 180 A1 discloses an information input unit, method, and computer program. When a predetermined event is generated, a sensitivity detection unit sets a sensitivity threshold value for input detection to a threshold value of a high-sensitivity mode, and the CPU displays a screen corresponding to the event. When an input operation is performed on the screen, the sensitivity detection unit resets a subsequent sensitivity threshold value according to input sensitivity information detected when the input operation is performed.

EP 2 544 078 A1 discloses a display device. A PND having a touch panel is provided with a switch turned on when an operator holds the PND by one hand. Further, the PND is configured to change and set a touch detection threshold to detect, according to "ON" or "OFF" of this switch, whether the operator touches the touch panel:
US 2015/042607 A1 discloses a touch detection circuit, method, and electronic apparatus. The touch detection circuit includes a map generation section configured to compare a touch signal corresponding to a proximity state of an external proximity object with each of a plurality of thresholds to generate a plurality of pieces of map data each showing touch regions, a labeling section configured to selectively perform labeling on the touch regions in the plurality of pieces of map data, based on inclusive relationship of the touch regions between the plurality of pieces of map data, and a detection section configured to perform touch detection based on processing results by the labeling section.

EP 3 220 243 A1 discloses an input device capable of suppressing erroneous determinations due to temperature changes or the like even in a case where a touch operation is determined.

JP 2015 106162 A discloses an electronic device which comprises a threshold setting unit that changes the threshold Th used in the operation determination unit to an adjustment threshold Taj of a value equal to or more than a reference threshold Tmin, from the reference threshold Tmin as a normal value, at a lapsed time of prescribed time TA after it is determined that the input operation is performed.

The present invention relates to a determination device and method according to the appended claims.

The present invention provides a determination device and method that are capable of dealing with operations performed by, for example, fingers wearing gloves having different thicknesses without previously measuring sensitivities for the different thicknesses.

### BRIEF DESCRIPTION OF THE DRAWINGS

Fig. 1 is a block diagram of an exemplary configuration of a determination device according to an embodiment of the present invention;
Fig. 2 is a flowchart of an exemplary main process;
Fig. 3 is a flowchart of an exemplary touch state determination process;
Fig. 4 is a diagram explaining that a first threshold value is set in response to movement of an operating object and whether the operating object is in a touch state relative to an operation surface is determined;
Fig. 5 is a diagram comparatively explaining touch state determinations related to operating objects wearing gloves having different thicknesses;
Fig. 6 is a diagram comparatively explaining changes in variations in capacitances caused by operating objects approaching the operation surface at different speeds;
Fig. 7 is a diagram illustrating a proximity region; and
Fig. 8 is a diagram illustrating another proximity region.

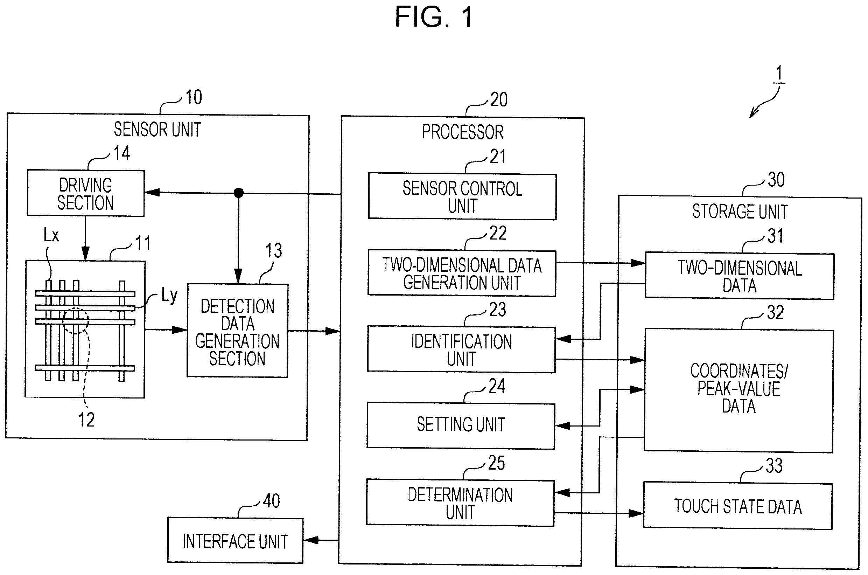

A determination device according to an embodiment of the present invention will be described below. Fig. 1 is a diagram of an exemplary configuration of a determination device 1 according to an embodiment. Referring to Fig. 1, the determination device 1 includes a sensor unit 10, a processor 20, a storage unit 30, and an interface unit 40. The determination device 1 determines whether an operating object, such as a finger, is in a touch state relative to an operation surface. The determination device 1 constitutes at least part of an input apparatus, such as a touch pad or a touch panel, capable of inputting information in response to a touch operation on the operation surface.

The sensor unit 10 detects capacitances that vary in response to a touch or proximity (hereinafter, also simply referred to as "proximity") of an object in a plurality of detection positions arranged on the operation surface, and generates detection data indicating a detection result. Referring to Fig. 1, the sensor unit 10 includes a sensor matrix 11, a detection data generation section 13, and a driving section 14. The sensor matrix 11 includes a matrix of capacitive sensor elements (capacitors) 12 each having a capacitance that varies with the degree of proximity of an object to the capacitive sensor element 12. The detection data generation section 13 generates detection data based on the capacitances of the capacitive sensor elements 12. The driving section 14 applies a driving voltage to the capacitive sensor elements 12.

As illustrated in Fig. 1, the sensor matrix 11 includes a plurality of driving electrodes Lx extending in a longitudinal direction of the sensor matrix 11 and a plurality of detecting electrodes Ly extending in a lateral direction of the sensor matrix 11. The driving electrodes Lx are arranged parallel to one another in the lateral direction and the detecting electrodes Ly are arranged parallel to one another in the longitudinal direction. The driving electrodes Lx are insulated from the detecting electrodes Ly. The driving electrodes Lx intersect the detecting electrodes Ly, thus forming a lattice pattern. The capacitive sensor element 12 is disposed in the vicinity of each of the intersections of the driving electrodes Lx and the detecting electrodes Ly. Although the electrodes Lx and Ly are strip-shaped in Fig. 1, the electrodes may have any other shape or pattern, such as a diamond pattern.

The driving section 14 applies a driving voltage to each capacitive sensor element 12 of the sensor matrix 11. For example, the driving section 14 sequentially selects one of the driving electrodes Lx and periodically changes the potential of the selected driving electrode Lx under the control of the processor 20. A change in potential of the driving electrode Lx within a predetermined range causes a driving voltage applied to the capacitive sensor element 12 disposed in the vicinity of each intersection of the driving electrode Lx and the detecting electrode Ly to change within a predetermined range, thus charging or discharging the capacitive sensor element 12.

The detection data generation section 13 generates detection data that depends on charge transferred in each detecting electrode Ly when the capacitive sensor element 12 is charged or discharged in response to a driving voltage applied by the driving section 14. Specifically, the detection data generation section 13 samples charge transferred in each detecting electrode Ly synchronously with a periodic change in driving voltage applied by the driving section 14, and generates detection data based on a sampling result.

For example, the detection data generation section 13 includes a capacitance-to-voltage conversion circuit (CV conversion circuit) that outputs a voltage responsive to a capacitance of the capacitive sensor element 12 and an analog-to-digital conversion circuit (AD conversion circuit) that converts an output signal of the CV conversion circuit to a digital signal and outputs the signal as detection data.

The CV conversion circuit samples charge transferred in the detecting electrode Ly under the control of the processor 20 each time the capacitive sensor element 12 is charged or discharged in response to a periodic change in driving voltage applied by the driving section 14. Specifically, each time a positive or negative charge is transferred in the detecting electrode Ly, the CV conversion circuit transfers this charge or a charge proportional thereto to a reference capacitor, and outputs a signal responsive to a voltage generated in the reference capacitor. For example, the CV conversion circuit outputs a signal responsive to an integrated value or an average value of charge periodically transferred in the detecting electrode Ly or charge proportional thereto. Under the control of the processor 20, the AD conversion circuit converts the output signal of the CV conversion circuit to a digital signal at predetermined intervals, and outputs the digital signal as detection data.

As described above, the sensor unit 10 is configured to detect a touch or proximity of an object in response to a variation in capacitance (mutual capacitance) between the electrodes (Lx, Ly). The sensor unit 10 may have any other configuration. The sensor unit 10 may detect a proximity of an object using any of various methods. For example, the sensor unit 10 may be of a type that detects a capacitance (self-capacitance) formed between an electrode and ground by a close object. In the sensor unit 10 of a self-capacitance detection type, a driving voltage is applied to a detecting electrode.

The processor 20 is a circuit that controls an overall operation of the determination device 1. For example, the processor 20 includes a computer that performs a process in accordance with instruction codes of a program stored in the storage unit 30, which will be described later, and a logic circuit that achieves a specific function. Processing of the processor 20 may be entirely implemented by the computer and the program. Part or the whole of processing of the processor 20 may be implemented by a dedicated logic circuit.

In the exemplary configuration of Fig. 1, the processor 20 includes a sensor control unit 21, a two-dimensional data generation unit 22, an identification unit 23, a setting unit 24, and a determination unit 25.

The sensor control unit 21 controls the sensor unit 10 to perform a detection operation of periodically detecting a proximity of an object to the operation surface in the detection positions (the capacitive sensor elements 12 of the sensor matrix 11). Specifically, the sensor control unit 21 controls the driving section 14 and the detection data generation section 13 so that driving electrode selection and pulse voltage generation in the driving section 14 and detecting electrode selection and detection data generation in the detection data generation section 13 are periodically performed at appropriate timings.

The two-dimensional data generation unit 22 generates two-dimensional data 31 in matrix form based on a detection result of the sensor unit 10 and stores the data 31 into the storage unit 30. The two-dimensional data 31 contains a plurality of data items based on the degree of proximity of an object to the operation surface in the detection positions.

For example, the two-dimensional data generation unit 22 stores the detection data, output from the sensor unit 10, in matrix form into a storage area (current value memory) of the storage unit 30. The two-dimensional data generation unit 22 calculates differences between the detection data in matrix form stored in the current value memory and base values in matrix form previously stored in another storage area (base value memory) of the storage unit 30, and stores a calculation result indicating the differences as two-dimensional data 31 into the storage unit 30. The base value memory stores reference values (base values) of detection data for a non-proximity state in which any object is not close to the operation surface. The two-dimensional data 31 indicates variations (variations in capacitances) of detection data from the non-proximity state.

The identification unit 23 identifies one or more operating objects close to the operation surface individually based on the two-dimensional data 31 generated by the two-dimensional data generation unit 22, and generates coordinates/peak-value data 32 for each identified operating object. The coordinates/peak-value data 32 indicates the coordinates of a position of the identified operating object on the operation surface and a variation (peak value) in capacitance at the position. For example, the identification unit 23 specifies, based on the two-dimensional data 31, one or more proximity regions, serving as regions on the operation surface, in each of which capacitances vary in response to a proximity of the corresponding operating object. The identification unit 23 specifies, as a peak value, a maximum variation of variations in capacitances (hereinafter, "capacitance variations") at a plurality of detection positions in each of the specified proximity regions, and generates the coordinates/peak-value data 32 indicating the coordinates of a detection position corresponding to the specified peak value and the peak value. The term "peak value" can also refer to a spatial maximum value of capacitance variations in a proximity region.

The identification unit 23 identifies the same operating object for multiple cycles of the periodic detection operation of the sensor unit 10. For example, the identification unit 23 assigns an identical identification code to a plurality of coordinates/peak-value data items 32 about a single operating object generated over multiple cycles of the detection operation. The term "identification code" can refer to information for tracking a single operating object over multiple cycles. For example, the identification unit 23 can identify or recognize a single operating object based on comparisons of proximity regions in a plurality of two-dimensional data items 31 generated over multiple cycles of the detection operation.

The setting unit 24 sets a first threshold value T1 based on the coordinates/peak-value data 32 generated by the identification unit 23. The first threshold value T1 is used to determine whether an operating object is in the touch state. For example, the setting unit 24 sets the first threshold value T1 based on a temporal change in peak value contained in the coordinates/peak-value data 32. An operation of setting the first threshold value T1 will be described in detail later.

The determination unit 25 compares a peak value contained in the coordinates/peak-value data 32 with the first threshold value T1 set by the setting unit 24 to determine, based on a result of the comparison, whether an operating object is in the touch state. When the operating object is determined to be in the touch state, the determination unit 25 generates touch state data 33 indicating the touch state at the coordinates of a position corresponding to the operating object and stores the generated data into the storage unit 30. An operation of determining whether an operating object is in the touch state will be described in detail later.

The storage unit 30 stores constant data and variable data to be used for processing of the processor 20. If the processor 20 includes a computer, the storage unit 30 may store a program executed by the computer. The storage unit 30 includes a volatile memory, such as a dynamic random access memory (DRAM) or a static RAM (SRAM), a non-volatile memory, such as a flash memory, and a hard disk.

The interface unit 40 is a circuit through which the determination device 1 transmits and receives data to and from another controller (e.g., an integrated circuit (IC) for controlling an electronic apparatus including the determination device 1). The processor 20 outputs information stored in the storage unit 30 to the controller (not illustrated) through the interface unit 40.

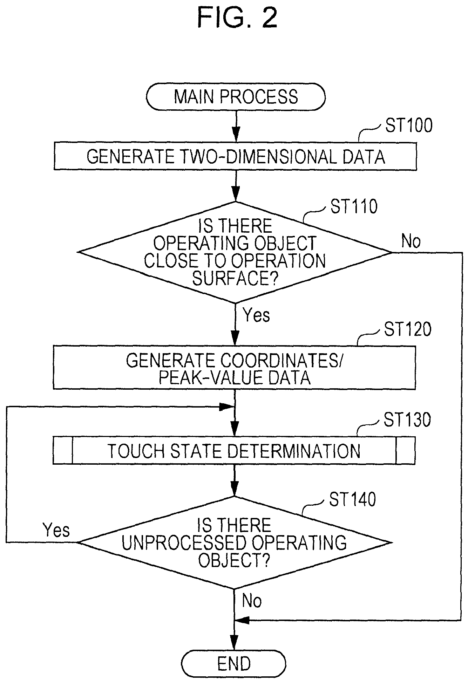

An operation of the determination device 1 with the above-described configuration will now be described. Fig. 2 is a flowchart of an exemplary main process executed by the processor 20 of the determination device 1. The main process is executed every cycle of the detection operation of the sensor unit 10.

Referring to Fig. 2, in the main process, the two-dimensional data generation unit 22 first generates two-dimensional data 31 (ST100). As described above, the two-dimensional data 31 is generated based on detection data obtained by the sensor unit 10.

If there is an operating object close to the operation surface (Yes in ST110), the identification unit 23 generates coordinates/peak-value data 32 based on the two-dimensional data 31 (ST120). If there is no operating object close to the operation surface (No in ST110), the main process terminates. For example, if capacitance variations in multiple detection positions indicated by the two-dimensional data 31 are each zero or less than or equal to a reference value, it is determined that there is no operating object close to the operation surface.

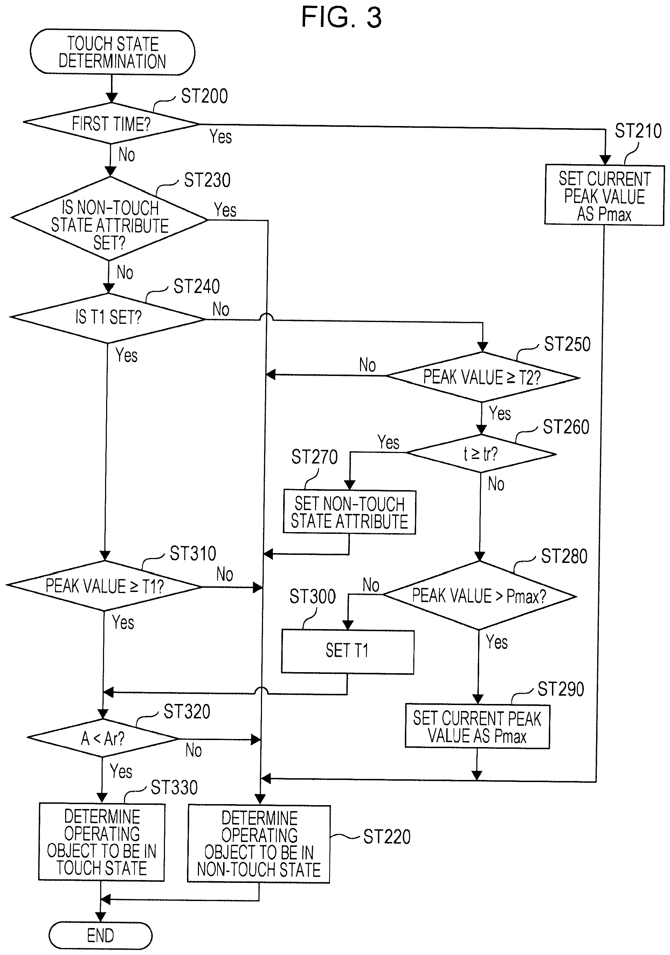

After the coordinates/peak-value data 32 is generated based on a determination that there is an operating object close to the operation surface, touch state determination (ST130) is performed as will be described with reference to Fig. 3. If there are multiple operating objects close to the operation surface, the touch state determination is sequentially executed for each of the operating objects (Yes in ST140).

The touch state determination is repeatedly executed for a single operating object while the operating object is being identified. Fig. 3 illustrates a flowchart of the touch state determination process. If the process is executed on a target operating object for the first time (Yes in ST200), the setting unit 24 sets a current peak value as a maximum value Pmax of a peak value changing over time (ST210). Specifically, the setting unit 24 stores, as the maximum value Pmax, a peak value contained in the coordinates/peak-value data 32 generated in ST120 of the main process into the storage unit 30.

The determination unit 25 determines the operating object to be in a non-touch state (ST220). The touch state determination process terminates. As described above, in the first touch state determination process for an identified operating object close to the operation surface, the maximum peak value Pmax is set and the operating object is determined to be in the non-touch state.

In the second and subsequent touch state determination processes, the determination unit 25 determines whether a non-touch state attribute is set for the operating object (ST230). In the second touch state determination process, the non-touch state attribute is not set (No in ST230). The setting unit 24 determines whether the first threshold value T1 is set (ST240). In the second touch state determination process, the first threshold value T1 is not set (No in ST240). The setting unit 24 determines whether the peak value is greater than or equal to a second threshold value T2 (ST250).

While the peak value is less than the second threshold value T2 (No in ST250), the operating object is determined to be in the non-touch state (ST220). As described above, the second threshold value T2 functions as a lower limit of peak values at which the operating object can be determined to be in the touch state.

In the second or subsequent touch state determination process, when the peak value is greater than or equal to the second threshold value T2 (Yes in ST250), the determination unit 25 determines whether an elapsed time t is greater than or equal to a reference value tr (ST260). The term "elapsed time t" as used herein refers to a time taken for the peak value to be greater than or equal to the second threshold value T2 after the operating object is identified (for example, after execution of the first touch state determination process).

If the elapsed time t is determined to be greater than or equal to the reference value tr (Yes in ST260), the determination unit 25 sets a non-touch state attribute for the operating object (ST270) and then determines the operating object to be in the non-touch state (ST220). The touch state determination process terminates. In the next and subsequent touch state determination processes, the operating object with the non-touch state attribute set (Yes in ST230) is immediately determined to be in the non-touch state (ST220). In other words, a touch by an operating object in the case where the elapsed time t (taken for the peak value to be greater than or equal to the second threshold value T2) is greater than or equal to the reference value tr is always determined to be the non-touch state.

On the other hand, if the elapsed time t is determined to be less than the reference value tr (No in ST260), the setting unit 24 determines whether the peak value is greater than the maximum value Pmax (ST280). If the peak value is greater than the maximum value Pmax (Yes in ST280), namely, if the peak value is increasing as the operating object approaches the operation surface, the setting unit 24 sets the current peak value as the maximum value Pmax (ST290) and the determination unit 25 determines the operating object to be in the non-touch state (ST220). The touch state determination process terminates.

In the next and subsequent touch state determination processes, if the peak value is less than or equal to the maximum value Pmax (No in ST280), namely, if the peak value stops increasing, the setting unit 24 sets the first threshold value T1 (ST300).

In the present embodiment, the first threshold value T1 is set based on the peak value. For example, the first threshold value T1 is set to be less than the peak value. For example, a value obtained by multiplying the peak value by 0.8 is set as the first threshold value T1. The set first threshold value T1 is stored into the storage unit 30.

After the first threshold value T1 is set, the determination unit 25 determines whether the area, indicated at A, of a proximity region, serving as a region on the operation surface to which the operating object is close, is less than a reference value Ar (ST320). If the area A is less than the reference value Ar (Yes in ST320), the determination unit 25 determines the operating object to be in the touch state (ST330). The touch state determination process then terminates. As described above, in response to a determination that the operating object is in the touch state, the determination unit 25 generates touch state data 33 indicating the touch state at the coordinates of a position contained in the coordinates/peak-value data 32 and stores the data into the storage unit 30. On the other hand, if the area A is greater than or equal to the reference value Ar (No in ST320), the determination unit 25 determines the operating object to be in the non-touch state (ST220). The touch state determination process then terminates.

In the touch state determination process in the present embodiment, once the first threshold value T1 is set (Yes in ST240), the determination unit 25 determines whether the peak value is greater than or equal to the first threshold value T1. If the peak value is greater than or equal to the first threshold value T1 (Yes in ST310), the determination unit 25 determines, based on the value of the above-described area A, whether the operating object is in the touch state (ST320, ST330, and ST220). If the peak value is less than the first threshold value T1 (No in ST310), the determination unit 25 determines the operating object to be in the non-touch state. As described above, while the operating object is identified, whether the operating object is in the touch state is determined based on the same first threshold value T1.

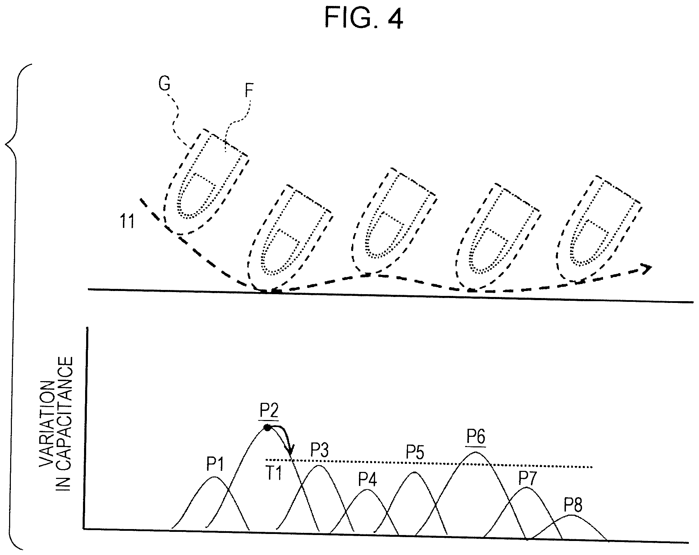

Fig. 4 is a diagram explaining that the first threshold value T1 is set in response to movement of an operating object and whether the operating object is in the touch state is determined. Upper part of Fig. 4 illustrates a change in proximity of an operating object F wearing a glove G to the operation surface (the sensor matrix 11). The horizontal axis of Fig. 4 denotes time. Lower part of Fig. 4 illustrates variations in capacitances caused in response to a proximity of the operating object F illustrated in the upper part of Fig. 4. In the lower part of Fig. 4, each bell-shaped curve corresponds to capacitance variations in a proximity region to which the operating object F is close at certain time. The top of the curve corresponds to a peak value at this time.

Referring to Fig. 4, as the operating object F approaches or moves to the operation surface, the peak value increases (P1 to P2). When the operating object F stops moving to the operation surface, the peak value stops increasing (P2). At this time, the first threshold value T1 that is less than the peak value (P2) is set and the operating object F is determined to be in the touch state. After that, whether the operating object F is in the touch state is determined based on a result of comparison between the first threshold value T1 and the peak value. In Fig. 4, if the peak value (P6) is greater than or equal to the first threshold value T1, the operating object F is determined to be in the touch state. If the peak value (P3 to P5, P7, and P8) is less than the first threshold value T1, the operating object F is determined to be in the non-touch state.

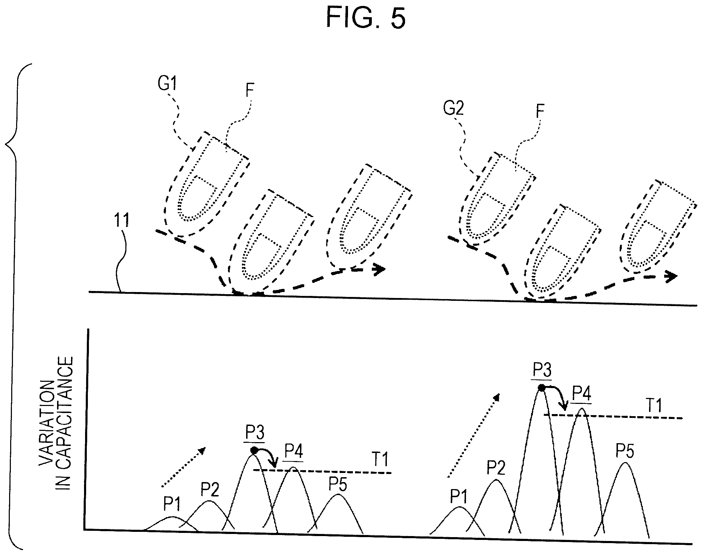

Fig. 5 is a diagram comparatively explaining touch state determinations related to operating objects wearing gloves having different thicknesses. Fig. 5 illustrates changes in proximity of the operating objects and variations in capacitances caused in response to proximities of the operating objects in a manner similar to Fig. 4. Left part of Fig. 5 corresponds to a case of the operating object F wearing a glove G1 and right part of Fig. 5 corresponds to a case of the operating object F wearing a glove G2 that is thinner than the glove G1.

Referring to Fig. 5, assuming that the operating objects F approach the operation surface in the same manner, variations in capacitances caused by the operating object F with the thin glove G2 (in the right part of Fig. 5) are greater than those caused by the operating object F with the thick glove G1 (in the left part of Fig. 5). However, the capacitances vary over time in the same manner in both cases. In both of these cases, the peak values stop increasing at the same timing, the first threshold values T1 are set based on the peak values (P3), and the peak values (P4) greater than or equal to the first threshold values T1 are obtained at the same timing, at which the operating objects F are determined to be in the touch state.

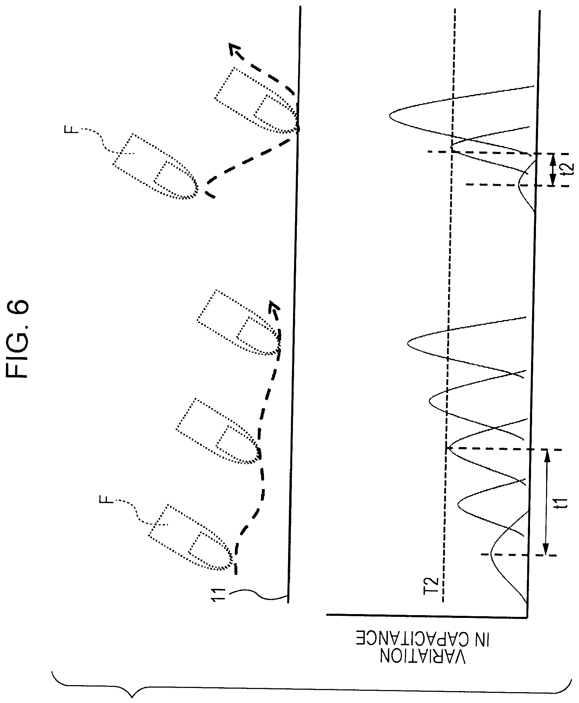

Fig. 6 is a diagram comparatively explaining changes in variations in capacitances caused by operating objects approaching the operation surface at different speeds. Fig. 6 illustrates changes in proximity of the operating objects and variations in capacitances caused in response to proximities of the operating objects in a manner similar to Figs. 4 and 5. Left part of Fig. 6 illustrates a case where the operating object F moves to the operation surface at a relatively low speed and right part of Fig. 6 illustrates a case where the operating object F moves to the operation surface at a relatively high speed.

Referring to Fig. 6, in the case where the operating object F moves at a relatively low speed (in the left part of Fig. 6), a time t1 taken for the peak value to be greater than or equal to the second threshold value T2 after the operating object F is identified is long. In contrast, in the case where the operating object F moves at a relatively high speed (in the right part of Fig. 6), a time t2 taken for the peak value to be greater than or equal to the second threshold value T2 after the operating object F is identified is short. As described above, in the touch state determination in the present embodiment, a touch by an operating object in the case where the elapsed time t taken for the peak value to be greater than or equal to the second threshold value T2 is greater than or equal to the reference value tr is always determined to be the non-touch state. In the case where the operating object F approaches the operation surface at a relatively low speed as illustrated in the left part of Fig. 6, when the elapsed time t is greater than or equal to the reference value tr, a touch by the operating object F is always determined to be the non-touch state. A proximity of the operating object F approaching the operation surface at a relatively low speed may be an unintentional proximity to the operation surface. A likelihood that an unintentional proximity may be determined to be the touch state is reduced or eliminated.

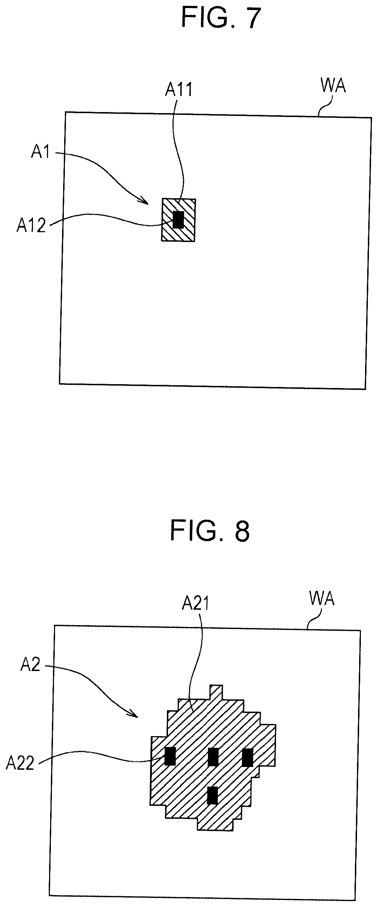

Figs. 7 and 8 each illustrate an exemplary proximity region as a region on the operation surface to which an operating object is close. Fig. 7 illustrates a proximity region A1 in a whole area WA of the operation surface. The proximity region A1 includes a portion A11 where capacitance variations are relatively small and a portion A12 where capacitance variations are relatively large. Fig. 8 illustrates a proximity region A2 whose area is greater than that of the above-described proximity region A1 in the whole area WA of the operation surface. Like the proximity region A1, the proximity region A2 includes a portion A21 where capacitance variations are relatively small and portions A22 where capacitance variations are relatively large.

The proximity region A2 in Fig. 8 has an area greater than that of the proximity region A1 in Fig. 7. As described above, in the touch state determination in the present embodiment, if the peak value is greater than or equal to the first threshold value T1, a proximity in a proximity region whose area A is greater than or equal to the reference value Ar is determined to be the non-touch state. For example, when the area of a proximity region is large, or greater than or equal to the reference value Ar as illustrated in Fig. 8, a proximity in this proximity region is determined to be the non-touch state. A proximity of an operating object in a proximity region having a large area in the operation surface may be an unintentional proximity. A likelihood that an unintentional proximity may be determined to be the touch state is reduced or eliminated.

In the above-described determination device 1 according to the present embodiment, the first threshold value T1 for touch state determination is set based on a temporal change in variations in detected capacitances (peak value at the time when the peak value stops increasing). The determination device 1 can deal with operations by, for example, fingers wearing gloves having different thicknesses without previously measuring first threshold values T1 (sensitivities) for the different thicknesses of the gloves.

The present invention can be employed in, for example, a touch panel and a touch pad.

## Claims

1. A determination device (1) comprising:
a sensor unit (10) for detecting capacitances that vary in response to a touch or proximity of an operating object on or to an operation surface;
a setting unit (24) for setting a first threshold value based on a temporal change in variations in the detected capacitances; and
a determination unit (25) for determining, based on a result of comparison between the variations in the detected capacitances and the set first threshold value, whether the operating object is in a touch state relative to the operation surface; and
an identification unit (23) for identifying the operating object based on the variations in the detected capacitances, wherein the setting unit (24) sets the first threshold value each time the identification unit (23) identifies a new operating object,
wherein the setting unit (24) sets, based on a maximum value among peak values of the variations in the capacitances changing over time in response to movement of the operating object, the first threshold value less than the maximum value, the first threshold value being a value obtained by multiplying the maximum value by 0.8 and
wherein the maximum value is decided to be a peak value at a time when the peak values stop increasing,
**characterised in that**
the identification unit (23) specifies, based on a distribution of the variations in the detected capacitances in the operation surface, an area of a region where the identified operating object touches or is close to the operation surface, and
when the area is greater than or equal to a predetermined value, the determination unit (25) determines the operating object to be not in the touch state regardless of the result of comparison between the variations in the detected capacitances and the first threshold value.

2. The device according to Claim 1, wherein if the peak value is less than the first threshold value, the determination unit (25) determines the operating object to be in the non-touch state.

3. The device according to Claim 1,
wherein the identification unit (23) identifies one or more operating objects individually,
wherein the setting unit (24) sets the first threshold value for each of the identified operating objects, and
wherein the determination unit (25) determines, for each of the identified operating objects, whether the operating object is in the touch state.

4. The device according to Claim 3,
wherein the identification unit (23) specifies, based on a distribution of the variations in the detected capacitances in the operation surface, the peak value of the variations in the capacitances related to the identified operating object,
wherein the setting unit (24) sets the first threshold value based on a temporal change in the specified peak value, and
wherein the determination unit (25) determines, based on a result of comparison between the specified peak value and the set first threshold value, whether the operating object is in the touch state.

5. The device according to Claim 4, wherein when the specified peak value changes at a rate less than a predetermined value, the determination unit (25) determines the operating object to be not in the touch state regardless of the result of comparison between the specified peak value and the first threshold value.

6. The device according to Claim 5, wherein when a time taken for the specified peak value to be greater than or equal to a second threshold value after the operating object is identified is greater than or equal to a predetermined value, the determination unit (25) determines the operating object to be not in the touch state regardless of the result of comparison between the specified peak value and the first threshold value.

7. The device according to Claim 6, wherein the setting unit (24) sets the first threshold value based on a temporal change in the specified peak value after the peak value is greater than or equal to the second threshold value.

8. A determination method comprising:
detecting capacitances that vary in response to a touch or proximity of an operating object on or to an operation surface;
setting a first threshold value based on a temporal change in variations in the detected capacitances; and
determining, based on a result of comparison between the variations in the detected capacitances and the set first threshold value, whether the operating object is in a touch state relative to the operation surface,
identifying the operating object based on the variations in the detected capacitances, wherein the first threshold value is set each time a new operating object is identified,
wherein the first threshold value is set less than a maximum value among peak values of the variations in the capacitances changing over time in response to movement of the operating object, the first threshold value being a value obtained by multiplying the maximum value by 0.8, and
wherein the maximum value is decided to be a peak value at a time when the peak values stop increasing,
**characterised by**
specifying, based on a distribution of the variations in the detected capacitances in the operation surface, an area of a region where the identified operating object touches or is close to the operation surface, and
when the area is greater than or equal to a predetermined value, the operating object is determined to be not in the touch state regardless of the result of comparison between the variations in the detected capacitances and the first threshold value.

## Patentansprüche

1. Bestimmungsvorrichtung (1), die aufweist:
eine Sensoreinheit (10) zum Detektieren von elektrischen Kapazitäten, die als Reaktion auf eine Berührung oder Nähe eines Bedienungsobjekts mit bzw. zu der Bedienungsoberfläche variieren;
eine Einstelleinheit (24) zum Einstellen eines ersten Schwellenwerts auf Grundlage einer zeitlichen Änderung in Variationen in den detektierten Kapazitäten;
und
eine Bestimmungseinheit (25) zum Bestimmen, auf Grundlage eines Vergleichsergebnisses zwischen den Variationen in den detektierten Kapazitäten und dem eingestellten ersten Schwellenwert, ob sich das Bedienungsobjekt in einem Berührungszustand relativ zu der Bedienungsoberfläche befindet; und
eine Identifikationseinheit (23) zum Identifizieren des Bedienungsobjekts auf Grundlage der Variationen in den detektierten Kapazitäten, wobei die Einstelleinheit (24) den ersten Schwellenwert jedes Mal einstellt, wenn die Identifikationseinheit (23) ein neues Bedienungsobjekt identifiziert,
wobei die Einstelleinheit (24), auf Grundlage eines Maximalwerts aus Spitzenwerten der Variationen in den Kapazitäten, die sich im Verlauf von Zeit als Reaktion auf eine Bewegung des Bedienungsobjekts ändern, den ersten Schwellenwert auf weniger als den Maximalwert einstellt, wobei der erste Schwellenwert ein Wert ist, der durch Multiplizieren des Maximalwerts mit 0,8 erreicht wird, und
wobei entschieden wird, dass der Maximalwert ein Spitzenwert ist zu einer Zeit, wenn die Spitzenwerte nicht weiter steigen,
**dadurch gekennzeichnet, dass**
die Identifikationseinheit (23), auf Grundlage einer Verteilung der Variationen in den detektierten Kapazitäten in der Bedienungsoberfläche, einen Bereich einer Region festlegt, wo das identifizierte Bedienungsobjekt die Bedienungsoberfläche berührt oder sich in deren Nähe befindet, und
wenn der Bereich größer oder gleich einem vorbestimmten Wert ist, die Bestimmungseinheit (25) unabhängig von dem Vergleichsergebnis zwischen den Variationen in den detektierten Kapazitäten und dem ersten Schwellenwert bestimmt, dass sich das Bedienungsobjekt nicht im Berührungszustand befindet.

2. Vorrichtung nach Anspruch 1, wobei, wenn der Spitzenwert geringer als der erste Schwellenwert ist, die Bestimmungseinheit (25) bestimmt, dass sich das Bedienungsobjekt im Nicht-Berührungszustand befindet.

3. Vorrichtung nach Anspruch 1,
wobei die Identifikationseinheit (23) eines oder mehrere Bedienungsobjekte einzeln identifiziert,
wobei die Einstelleinheit (24) den ersten Schwellenwert für jedes der identifizierten Bedienungsobjekte einstellt und
wobei die Bestimmungseinheit (25) für jedes der identifizierten Bedienungsobjekte bestimmt, ob sich das Bedienungsobjekt im Berührungszustand befindet.

4. Vorrichtung nach Anspruch 3,
wobei die Identifikationseinheit (23), auf Grundlage einer Verteilung der Variationen in den detektierten Kapazitäten in der Bedienungsoberfläche, den Spitzenwert der Variationen in den Kapazitäten in Bezug auf das identifizierte Bedienungsobjekt festlegt,
wobei die Einstelleinheit (24) den ersten Schwellenwert auf Grundlage einer zeitlichen Änderung in dem festgelegten Spitzenwert einstellt und
wobei die Bestimmungseinheit (25) auf Grundlage eines Vergleichsergebnisses zwischen dem festgelegten Spitzenwert und dem eingestellten ersten Schwellenwert bestimmt, ob sich das Bedienungsobjekt im Berührungszustand befindet.

5. Vorrichtung nach Anspruch 4, wobei, wenn sich der festgelegte Spitzenwert mit einer Rate von weniger als einem vorbestimmten Wert ändert, die Bestimmungseinheit (25) unabhängig von dem Vergleichsereignis zwischen dem festgelegten Spitzenwert und dem ersten Schwellenwert bestimmt, dass sich das Bedienungsobjekt nicht im Berührungszustand befindet.

6. Vorrichtung nach Anspruch 5, wobei, wenn eine Zeit, die es dauert, bis der festgelegte Spitzenwert größer oder gleich einem zweiten Schwellenwert wird, nachdem das Bedienungsobjekt identifiziert wurde, größer oder gleich einem vorbestimmten Wert ist, die Bestimmungseinheit (25) unabhängig von dem Vergleichsergebnis zwischen dem festgelegten Spitzenwert und dem ersten Schwellenwert bestimmt, dass sich das Bedienungsobjekt nicht im Berührungszustand befindet.

7. Vorrichtung nach Anspruch 6, wobei die Einstelleinheit (24) den ersten Schwellenwert auf Grundlage einer zeitlichen Änderung in dem festgelegten Spitzenwert einstellt, nachdem der Spitzenwert größer oder gleich dem zweiten Schwellenwert ist.

8. Bestimmungsverfahren, das aufweist:
Detektieren von elektrischen Kapazitäten, die als Reaktion auf eine Berührung oder Nähe eines Bedienungsobjekts mit bzw. zu der Bedienungsoberfläche variieren;
Einstellen eines ersten Schwellenwerts auf Grundlage einer zeitlichen Änderung in Variationen in den detektierten Kapazitäten; und
Bestimmen, auf Grundlage eines Vergleichsergebnisses zwischen den Variationen in den detektierten Kapazitäten und dem eingestellten ersten Schwellenwert, ob sich das Bedienungsobjekt in einem Berührungszustand relativ zu der Bedienungsoberfläche befindet,
Identifizieren des Bedienungsobjekts auf Grundlage der Variationen in den detektierten Kapazitäten, wobei der erste Schwellenwert jedes Mal eingestellt wird, wenn ein neues Bedienungsobjekt identifiziert wird,
wobei der erste Schwellenwert auf weniger als einen Maximalwert aus Spitzenwerten der Variationen in den Kapazitäten, die sich im Verlauf von Zeit als Reaktion auf eine Bewegung des Bedienungsobjekts ändern, eingestellt wird, wobei der erste Schwellenwert ein Wert ist, der durch Multiplizieren des Maximalwerts mit 0,8 erreicht wird, und
wobei entschieden wird, dass der Maximalwert ein Spitzenwert ist zu einer Zeit, wenn die Spitzenwerte nicht weiter steigen,
**gekennzeichnet durch**
Festlegen, auf Grundlage einer Verteilung der Variationen in den detektierten Kapazitäten in der Bedienungsoberfläche, eines Bereichs einer Region, wo das identifizierte Bedienungsobjekt die Bedienungsoberfläche berührt oder sich in deren Nähe befindet, und
wenn der Bereich größer oder gleich einem vorbestimmten Wert ist, Bestimmen, dass sich das Bedienungsobjekt nicht im Berührungszustand befindet, unabhängig von dem Vergleichsergebnis zwischen den Variationen in den detektierten Kapazitäten und dem ersten Schwellenwert.

## Revendications

1. Dispositif de détermination (1), comprenant :
une unité à capteur (10) pour détecter des capacités, lesquelles varient en réaction à un effleurement ou une proximité d'un objet de manœuvre sur une surface de manœuvre, ou vers celle-ci ;
une unité de réglage (24) pour régler une première valeur seuil sur la base d'un changement temporel des variations des capacités détectées, et
une unité de détermination (25) pour déterminer, sur la base d'un résultat de comparaison entre les variations des capacités détectées et la première valeur seuil réglée, si oui ou non l'objet de manœuvre se trouve dans un état d'effleurement par rapport à la surface de manœuvre, et
une unité d'identification (23) pour identifier l'objet de manœuvre sur la base des variations des capacités détectées, dans lequel l'unité de réglage (24) règle la première valeur seuil à chaque fois que l'unité d'identification (23) identifie un nouvel objet de manœuvre,
dans lequel l'unité de réglage (24), sur la base d'une valeur maximale parmi des valeurs de crête des variations des capacités changeant dans le temps en réaction à un déplacement de l'objet de manœuvre, règle la première valeur seuil de manière à ce qu'elle soit inférieure à la valeur maximale, la première valeur seuil étant une valeur obtenue en multipliant la valeur maximale par 0,8, et
dans lequel la valeur maximale est décidée comme étant une valeur de crête à un temps où les valeurs de crête arrêtent d'augmenter,
**caractérisé en ce que**
l'unité d'identification (23), sur la base d'une distribution des variations des capacités détectées dans la surface de manœuvre, spécifie une zone d'une région où l'objet de manœuvre identifié effleure la surface de manœuvre, ou est proche de celle-ci, et
lorsque la zone est supérieure ou égale à une valeur prédéterminée, l'unité de détermination (25) détermine l'objet de manœuvre comme ne se trouvant pas dans l'état d'effleurement, indépendamment du résultat de comparaison entre les variations des capacités détectées et la première valeur seuil.

2. Dispositif selon la revendication 1, dans lequel si la valeur de crête est inférieure à la première valeur seuil, l'unité de détermination (25) détermine l'objet de manœuvre comme ne se trouvant pas dans l'état d'effleurement.

3. Dispositif selon la revendication 1,
dans lequel l'unité d'identification (23) identifie un ou plusieurs objets de manoeuvre individuellement ;
dans lequel l'unité de réglage (24) règle la première valeur seuil pour chacun des objets de manœuvre identifiés, et
dans lequel l'unité de détermination (25) détermine, pour chacun des objets de manœuvre identifiés, si oui ou non l'objet de manœuvre se trouve dans l'état d'effleurement.

4. Dispositif selon la revendication 3,
dans lequel l'unité d'identification (23), sur la base d'une distribution des variations des capacités détectées dans la surface de manœuvre, spécifie la valeur de crête des variations des capacités liées à l'objet de manœuvre identifié ;
dans lequel l'unité de réglage (24) règle la première valeur seuil sur la base d'un changement temporel de la valeur seuil spécifiée, et
dans lequel l'unité de détermination (25) détermine, sur la base d'un résultat de comparaison entre la valeur de crête spécifiée et la première valeur seuil réglée, si oui ou non l'objet de manœuvre se trouve dans l'état d'effleurement.

5. Dispositif selon la revendication 4, dans lequel lorsque la valeur de crête spécifiée change à une vitesse inférieure à une valeur prédéterminée, l'unité de détermination (25) détermine l'objet de manœuvre comme ne se trouvant pas dans l'état d'effleurement, indépendamment du résultat de comparaison entre la valeur de crête spécifiée et la première valeur seuil.

6. Dispositif selon la revendication 5, dans lequel lorsqu'un temps pris pour la valeur de crête spécifiée supérieure ou égale à une seconde valeur seuil après identification de l'objet de manœuvre est supérieur ou égal à une valeur prédéterminée, l'unité de détermination (25) détermine l'objet de manœuvre comme ne se trouvant pas dans l'état d'effleurement, indépendamment du résultat de comparaison entre la valeur de crête spécifiée et la première valeur seuil.

7. Dispositif selon la revendication 6, dans lequel l'unité de réglage (24) règle la première valeur seuil sur la base d'un changement temporel de la valeur seuil spécifiée, après que la valeur de crête soit supérieure ou égale à la seconde valeur seuil.

8. Procédé de détermination, comprenant les étapes consistant à :
détecter des capacités, lesquelles varient en réaction à un effleurement ou une proximité d'un objet de manœuvre sur une surface de manœuvre, ou vers celle-ci ;
régler une première valeur seuil sur la base d'un changement temporel des variations des capacités détectées, et
déterminer, sur la base d'un résultat de comparaison entre les variations des capacités détectées et la première valeur seuil réglée, si oui ou non l'objet de manœuvre se trouve dans un état d'effleurement par rapport à la surface de manœuvre, et
identifier l'objet de manœuvre sur la base des variations des capacités détectées, dans lequel la première valeur seuil est réglée à chaque fois qu'un nouvel objet de manœuvre est identifié ;
dans lequel la première valeur seuil est réglée de manière à ce qu'elle soit inférieure à la valeur maximale parmi des valeurs de crête des variations des capacités changeant dans le temps en réaction à un déplacement de l'objet de manœuvre, la première valeur seuil étant une valeur obtenue en multipliant la valeur maximale par 0,8, et
dans lequel la valeur maximale est décidée comme étant une valeur de crête à un moment où les valeurs de crête arrêtent d'augmenter,
**caractérisé par** les étapes suivantes
spécifier, sur la base d'une distribution des variations des capacités détectées dans la surface de manœuvre, une zone d'une région où l'objet de manœuvre identifié effleure la surface de manœuvre, ou est proche de celle-ci, et
lorsque la zone est supérieure ou égale à une valeur prédéterminée, l'objet de manœuvre est déterminé comme ne se trouvant pas dans l'état d'effleurement, indépendamment du résultat de comparaison entre les variations des capacités détectées et la première valeur seuil.
